Europäisches Patentamt

European Patent Office

Office européen des brevets

(19)

(11) Numéro de publication : **0 632 100 A1**

## (12) DEMANDE DE BREVET EUROPEEN

(21) Numéro de dépôt : **94401457.0**

(22) Date de dépôt : **28.06.94**

(51) Int. Cl.⁶ : **C08L 83/10,** C08L 79/08, C08L 79/04, C08L 77/10

(30) Priorité : **29.06.93 FR 9307888**

(43) Date de publication de la demande : **04.01.95 Bulletin 95/01**

(84) Etats contractants désignés :
**AT BE CH DE DK ES FR GB IT LI NL SE**

(71) Demandeur : **AGENCE SPATIALE EUROPEENNE**
**Organisation Intergouvernementale,**
**8-10, rue Mario Nikis**
**F-75738 Paris Cedex 15 (FR)**

(72) Inventeur : **Palsule, Sanjay**
**560 Lanark Road,**
**Juniper Green**
**Edinburg EH14 5EL, Scotland (GB)**

(74) Mandataire : **Vialle-Presles, Marie José et al**
**Cabinet Orès,**
**6, Avenue de Messine**
**F-75008 Paris (FR)**

(54) **Composites moléculaires de siloxane, procédé de préparation desdits composites, et leurs utilisations.**

(57) L'Invention est relative à des composites moléculaires de siloxane comprenant un polymère thermoplastique rigide de renforcement, dispersé au niveau moléculaire dans un copolymère flexible organosiloxane/polymère thermoplastique, à un procédé de préparation desdits composites, ainsi qu'à un matériau à surface enrichie en siloxane obtenu à partir desdits composites moléculaires de siloxane, et aux utilisations desdits composites et dudit matériau, en particulier pour la construction aérospatiale.

EP 0 632 100 A1

La présente Invention est relative à une nouvelle classe de dérivés de siloxane utilisables dans l'industrie aérospatiale.

Les polymères conventionnellement utilisés dans l'industrie aérospatiale, tels que les polyimides, les polyesters, et les composites carbone/époxy, présentent l'inconvénient de se dégrader rapidement sous l'attaque thermo-oxydative de l'oxygène atomique en basse orbite terrestre.

Il est connu que les polysiloxanes sont stables dans l'environnement de l'orbite terrestre basse. Une revue des effets de l'oxygène atomique sur les polysiloxanes et sur d'autres polymères, a par exemple été publiée par DAUPHIN ["Atomic oxygen : A Low orbit Plague", dans : Looking Ahead for Materials and Processes, Material Science Monographs, 41 (Eds J. DE BOSSU, G. BRIENS, & P. LISSACS), Elsevier Science Publishers, Amsterdam, pp 345-367, (1987)]. Toutefois, les polysiloxanes ont des propriétés thermiques et mécaniques médiocres, et une température de transition vitreuse basse, qui résultent de la faible énergie de cohésion entre les chaînes de polymères qui les constituent, et les rendent inutilisables comme matériaux de structure pour les engins spatiaux.

On connait également des copolymères résultant de la copolymérisation de monomères de siloxane avec des monomères entrant habituellement dans la composition de polymères thermoplastiques : dans l'exposé qui va suivre ces copolymères seront désignés sous le terme de "copolymères organosiloxane/polymère thermoplastique".

Tout comme les polysiloxannes, les copolymères organosiloxane/polymère thermoplastique ne possédent pas ni une température de transition vitreuse ni des propriétés mécaniques compatibles avec l'utilisation comme matériaux de structure pour les vaisseaux spatiaux.

Certains mélanges de copolymères flexibles organosiloxane/polymère thermoplastique avec des polymères thermoplastiques ont été décrits comme possédant des températures de transition vitreuses élevées. Cependant, il ne sont pas considérés comme possédant les propriétés mécaniques nécessaires pour être utilisés comme matériaux de structure pour les vaisseaux spatiaux. Par exemple, ARNOLD et al., [High Performance Polymers, Vol 2, pp 83, (1990)] ont développé un mélange de polybenzimidazole et de copolymère segmenté de polysiloxaneimide, à la surface duquel le siloxane prédomine. Les études dans un environnement simulant les conditions de l'orbite terrestre basse, ainsi que l'étude de l'action de l'oxygène atomique sur ces mélanges, ont montré que le siloxane présent en surface est transformé en silicate inorganique en présence d'oxygène atomique. Les températures de transition vitreuses de ces mélanges sont élevées, mais aucune indication concernant leurs propriétés mécaniques n'est donnée.

PATEL et al., [Macromolécules, Vol 21, pp 2689-2696, (1988)] ont développé un mélange de polysulfone/polysiloxane copolymérisé et de polysulfone dans lesquels l'enrichissement de la surface en siloxane était relativement élevé. En revanche, aucun résultat concernant le renforcement au niveau moléculaire du copolymère de siloxane dans le mélange n'est fourni, et aucune étude concernant les propriétés thermiques et mécaniques du mélange n'a été effectuée.

Des mélanges de copolymère de silicone et de polyétherimide (qui n'est pas un polymère thermoplastique rigide) sont décrits dans la Demande EP 0329 956 et dans le Brevet US 4 387 193. Ces matériaux ne sont pas renforcés au niveau moléculaire, et il est nécessaire d'y inclure un matériau de renforcement tel que des fibres, pour accroître leurs propriétés mécaniques.

D'autre part, on connaît sous le nom de "composites moléculaires" des matériaux constitués d'un polymère à structure flexible hélicoïdale, renforcé au niveau moléculaire par un polymère rigide en bâtonnet. Pour une revue des principaux composites moléculaires et de leurs propriétés, voir par exemple PAWLIKOSKI et al. : [Ann. Rev. Mater. Sci, Vol 21, pp 159-184, (1991)].

Les composites moléculaires sont préparés en mélangeant leurs constituants en solution, à une concentration plus faible que le point critique de concentration défini pour le système ternaire : polymère rigide/copolymère flexible/solvant, et en coagulant rapidement le mélange obtenu.

Le Brevet US n° 4,631,318 décrit un composite moléculaire comme un matériau constitué d'un polymère rigide de renforcement, dispersé au niveau moléculaire dans un polymère thermoplastique à structure flexible hélicoïdale. Ce composite moléculaire est analogue à un composite renforcé par des fibres.

HWANG et al. [J. Macromol. Sci. Phys., Vol B 22(2), pp 231-257, (1983)] ont développé un composite moléculaire constitué de poly-p-phénylènebenzobisthiazole et de poly-2,5(6)benzimidazole, qui possède des propriétés tensiles excellentes.

TAKAYANAGI et al. [J. Macromol. Sci Phys, Vol B 17(4), p 591, (1980)], ont développé des composites au niveau moléculaire, en dispersant des microfibrilles rigides de polyamides rigides aromatiques dans des polyamides flexibles aliphatiques.

Malgré les propriétés thermiques et mécaniques connues des composites moléculaires, aucune étude n'a permis d'aboutir au développement de composites moléculaires possédant des caractéristiques de surface spécifiques susceptibles de permettre la stabilité du matériau dans l'environnement de l'orbite terrestre basse, en présence d'oxygène moléculaire. En particulier, aucun composite moléculaire possédant une surface préférentiellement enrichie en l'un de ses composants n'était connu jusqu'à présent.

Or, l'Inventeur a maintenant découvert qu'un polymère flexible d'organosiloxane peut être renforcé au niveau moléculaire par un polymère thermoplastique rigide, ce qui permet l'obtention d'une nouvelle classe de composites moléculaires résistant à l'oxydation, dénommés ci-après "composites moléculaires de siloxane", dans lesquels le renforcement thermique et mécanique au niveau moléculaire du copolymère de siloxane par le polymère thermoplastique rigide, est accompagné d'une surface enrichie en siloxane, qui stabilise le matériau dans l'environnement de l'orbite terrestre basse, et en lui permet de résister à l'attaque par l'oxygène atomique.

La présente invention a pour objet un composite moléculaire dénommé composite moléculaire de siloxane, caractérisé en ce qu'il comprend un polymère thermoplastique rigide de renforcement, dispersé au niveau moléculaire dans un copolymère flexible organosiloxane/polymère thermoplastique.

Les composites moléculaires de siloxane conformes à l'Invention sont analogues au niveau moléculaire à des composites quasi-isotropiques renforcés par des fibres.

Le copolymère flexible organosiloxane/polymère thermoplastique et le polymère thermoplastique rigide qui constituent un composite moléculaire de siloxane conforme à l'invention sont miscibles thermodynamiquement. Un composite moléculaire de siloxane conforme à l'Invention possède donc un seuil de transition vitreuse unique, qui est intermédiaire entre celui des deux polymères qui le constituent.

Selon un mode de réalisation préféré de la présente Invention, la surface dudit composite moléculaire de siloxane est enrichie en siloxane.

Lorsqu'un composite moléculaire conforme à l'Invention est placé dans un environnement tel que celui de l'orbite terrestre basse, le siloxane qui est prédominant à la surface dudit composite réagit avec l'oxygène atomique pour former une couche protectrice de silice en surface.

Les composites moléculaires de siloxane conformes à l'invention possèdent des propriétés thermiques et mécaniques supérieures à celles des copolymères organosiloxane/polymère thermoplastique et des mélanges de copolymères organosiloxane/polymère thermoplastique avec des polymères thermoplastiques flexibles connus dans l'art antérieur, ce qui prouve l'existence d'un renforcement au niveau moléculaire du copolymère flexible organosiloxane/polymère thermoplastique par le polymère thermoplastique rigide.

Les composites moléculaires de siloxane conformes à l'Invention constituent donc un matériau nouveau, utilisable en particulier comme matériau de structure pour l'aérospatiale. En effet, grâce aux propriétés thermiques et mécaniques, ainsi qu'aux propriétés de surface des composites moléculaires de siloxane conformes à l'Invention, ce matériau conserve en orbite terrestre basse sa stabilité dimensionnelle et ses propriétés thermomécaniques, résiste à l'environnement spatial, (c'est-à-dire en particulier aux radiations ultraviolettes et aux débris spatiaux), et conserve en outre ces caractéristiques malgré les variations thermiques cycliques qui interviennent en orbite terrestre basse.

Tous les copolymères de polysiloxane avec un polymère thermoplastique du type linéaire, greffé, ou bloc, sont utilisables pour constituer le composant "copolymère flexible organosiloxane/polymère thermoplastique" du composite moléculaire de siloxane conforme à l'Invention. On citera à titre d'exemples non limitatifs de tels copolymères :
- le polydiméthylsiloxane/polyétherimide,
- le polydiméthylsiloxane/polycarbonate,
- le polydiméthylsiloxane/polysulfone,
- le polydiméthylsiloxane/polyamide-imide,
- le polydiméthylsiloxane/polyester,
- le polydiméthylsiloxane/polyestéramide,
- le polydiméthylsiloxane/-polyaryléther,
- le polydiméthylsiloxane/polystyrène,
- le polydiméthylsiloxane/polyméthylméthacrylate, etc ....

Tous les polymères thermoplastiques dans lesquels les chaînes sont rigides à cause d'une barrière d'énergie rotationnelle élevée des unités de structure qui les constituent, sont utilisables comme polymères rigides de renforcement pour la mise en oeuvre de la présente Invention. De tels polymères sont par exemple, et de façon non limitative, le poly-p-phénylène téréphtalamide, le polyamide-imide, le poly-p-benzamide, le poly-p-phénylène oxydiphénylène téréphtalamide, le poly-p-phénylène benzobisthiazole, le poly-p-phénylène benzobisoxazole, les poly-p-phénylènes à chaîne linéaire, etc...

Les composites moléculaires de siloxane conformes à l'Invention peuvent comprendre n'importe quelle proportion du polymère rigide et du copolymère flexible organosiloxane/polymère thermoplastique ; par exemple, ils peuvent comprendre entre 1 et 98 % en poids du copolymère flexible organosiloxane/polymère thermoplastique.

La présente invention a également pour objet un procédé de préparation des composites moléculaires de siloxane tels que définis ci dessus.

Ce procédé est caractérisé en ce qu'il comprend les étapes suivantes :

a) une étape au cours de laquelle l'on procède séparément, jusqu'à dissolution totale, à la dissolution d'une quantité appropriée du polymère thermoplastique rigide dans un solvant convenable, et à la dissolution d'une quantité appropriée du copolymère flexible organosiloxane/polymère thermoplastique, dans le même solvant que celui utilisé pour dissoudre le polymère thrmoplastique rigide ;

b) une étape au cours de laquelle on mélange de manière homogène les solutions obtenues à l'étape a);

c) une étape au cours de laquelle on ajoute la solution obtenue à l'issue de l'étape b) à au moins 20 fois son volume d'eau, ce qui provoque la formation de flocons de composite moléculaire de siloxane en suspension dans l'eau ;

d) des étapes de récupération, de lavage et de séchage desdits flocons de composite moléculaire de siloxane.

Selon un mode de réalisation préféré du procédé conforme à la présente Invention, on ajoute la solution obtenue à l'issue de l'étape b) à environ 50 fois son volume d'eau.

Selon un autre mode de mise en oeuvre préféré du procédé conforme à l'invention, le séchage desdits flocons comprend une étape de séchage dans un four à vide à une température d'environ 70°C pendant 12 à 48 heures, puis à une température d'environ 150°C pendant 12 à 48 heures, et finalement à une température supérieure d'environ 20°C à la température de transition vitreuse du polymère thermoplastique rigide pendant 12 à 48 heures.

Pour guider le choix d'un solvant permettant la mise en oeuvre du procédé conforme à l'Invention, on notera qu'un solvant convenable doit permettre la dissolution du polymère thermoplastique rigide aussi bien que du copolymère flexible organosiloxane/polymère thermoplastique, sans dégrader la structure des chaînes polymériques. Le choix de ce solvant est donc lié aux structures chimiques des deux polymères. En ce qui concerne le solvant pour le copolymère d'organosiloxane, on doit choisir le solvant qui dissout le composant organique dudit copolymère.

Des solvants convenant à la plupart des polymères sont connus : on peut par exemple se référer à la liste publiée par FUCHS dans [Polymer Handbook BRANDRUP & IMMERGENT (Eds) ; John WILEY, NY, (1990)].

Dans le cas d'un polymère pour lequel on ne disposerait pas de la description du solvant souhaitable, l'homme du métier peut aisément déterminer si un solvant particulier convient en procédant à des essais simples : par exemple l'on peut tenter de dissoudre séparément le polymère rigide et le copolymère flexible organosiloxane/polymère thermoplastique à une quantité de 10% en poids dans le solvant à tester, et vérifier, après agitation pendant 12 à 36 heures, si la dissolution est complète ou incomplète.

Sur la base des données de la littérature et des essais indiqués ci-dessus, les Inventeurs ont par exemple constaté que le polyamide-imide (sous forme de son précurseur l'acide polyamique), et le poly-p-phénylène-oxy-diphénylène-téréphtalamide peuvent être dissous par le diméthylacétamide ou le N-méthylpyrrolidinone, en présence de 1 ou 2% de chlorure de calcium (pourcentage molaire). D'autres polymères rigides comme le poly-p-phénylène-téréphtalamide et le polybenzobisthiazole peuvent être dissous par l'acide sulfurique.

Des copolymères flexibles d'organosiloxane tels que le polydiméthylsiloxane/polyétherimide, le polydiméthylsiloxane/polyamide-imide, peuvent être dissous par le diméthylacétamide ou par le N-méthylpyrrolidinone.

Contrairement aux procédés de préparation des composites moléculaires connus dans l'art antérieur, le procédé de l'Invention ne nécessite pas de définir un point critique de concentration et d'opérer à des concentrations plus faibles.

De préférence, un procédé de préparation de composites de siloxane conformes à l'Invention comprend les étapes suivantes :

1) Dissolution du polymère rigide (dont le température de transition vitreuse a été déterminée auparavant) dans un solvant convenable, pour obtenir une solution à environ 10% en poids dudit polymère ;

2) Dissolution du copolymère flexible organosiloxane/polymère thermoplastique (dont la température de transition vitreuse a été déterminée auparavant) dans le même solvant que celui utilisé pour l'étape 1, afin d'obtenir une solution à environ 10% en poids dudit polymère ;

3) Mélange sous agitation des solutions obtenues à l'étape 1 et à l'étape 2 pour obtenir une solution homogène ;

4) Coagulation de la solution obtenue à l'issue de l'étape 3 dans un grand volume d'eau, afin d'obtenir des flocons de composite moléculaire de siloxane en suspension dans l'eau ;

5) Filtration du mélange flocons/eau pour recueillir les flocons de composite moléculaire de siloxane ;

6) Lavage soigneux des flocons à l'eau courante pour enlever tout reste de solvant ;

7) Lavage des flocons obtenus à l'issue de l'étape 6 dans l'acétone pour enlever les restes d'eau de lavage ;

8) Séchage des flocons lavés à l'acétone dans un four à air pour éliminer une quantité maximale de solvant résiduel et des liquides de lavage ;

9) Séchage des flocons obtenus à l'issue de l'étape 8 dans un four à vide à une température d'environ 70°C pendant deux jours, puis à une température d'environ 150°C pendant deux jours, et finalement à une température supérieure d'environ 20°C à la température de transition vitreuse du polymère rigide pendant deux jours.

Les flocons de composite moléculaire de siloxane conformes à l'Invention peuvent ensuite être transformés, par toute technique connue en elle même, par exemple, être moulés à la forme désirée, et permettent d'obtenir un matériau dont la surface est enrichie en siloxane.

Egalement conformément à l'Invention, comme il n'est pas nécessaire de prendre en compte un point critique de concentration, le composite moléculaire de siloxane conforme à l'Invention peut être préparé par la technique du mélange par fusion ou du moulage par injection. Par exemple, du polyamide imide et du polysiloxane-imide peuvent être mélangés, et le mélange extrudé à une température au-dessus de 303°C.

Selon un mode de réalisation préféré, le matériau à base de composite moléculaire de siloxane conforme à la présente Invention, est un matériau isotropique.

Selon un autre mode de réalisation préféré, le matériau à base de composite moléculaire de siloxane conforme à la présente Invention, est un matériau anisotropique.

L'obtention d'un matériau isotropique ou d'un matériau anisotropique est conditionnée par la proportion de polymère thermoplastique rigide. En effet, si le pourcentage de polymère thermoplastique rigide excède un certain seuil, on observe un alignement préférentiel des chaînes dudit polymère, ce qui confère au composite moléculaire une structure anisotropique.

Le seuil à partir duquel on obtient un matériau anisotropique peut varier selon le système polymère rigide/copolymère flexible utilisé. L'Homme du métier peut toutefois aisément déterminer le pourcentage adéquat de polymère thermoplastique rigide en procédant à quelques essais et en vérifiant la nature isotropique ou anisotropique du composite moléculaire de siloxane obtenu par microscope électronique à balayage.

Avantageusement, on procède au moulage sous pression des flocons à une température supérieure de 30°C environ à la température de transition vitreuse du polymère thermoplastique rigide. Par exemple un film de composite moléculaire de siloxane conforme à l'Invention peut être obtenu de la sorte.

La présente Invention sera mieux comprise à l'aide du complément de description qui va suivre, qui se réfère à des exemples de préparation de composites moléculaires de siloxane conformes à l'Invention.

Il doit être bien entendu toutefois que ces exemples sont donnés uniquement à titre d'illustration de l'objet de l'Invention dont ils ne constituent en aucune manière une limitation.

## EXEMPLE 1

Le polymère rigide utilisé est le polyamideimide (PEI) commercialisé sous le nom de TORLON 4203 par la Société AMOCO PERFORMANCE PRODUCTS INC. Le copolymère flexible organosiloxane/polymère thermoplastique utilisé est un copolymère polysiloxane-imide (PSI) comprenant 37% en poids de siloxane, et commercialisé sous le nom de SILTEM 1500 par la Société G E PLASTICS.

15 g de polyamide-imide, sous la forme de son précurseur l'acide polyamique ont été dissous dans 150 ml de diméthyl-acétamide à une température de 60°C.

D'autre part, 85 g de PSI ont été dissous dans 850 ml de diméthyl acétamide à 60°C. Les deux solutions ont été mélangées sous agitation pendant 48 heures afin d'obtenir une solution homogène.

Cette solution a ensuite été additionnée à un volume de 5 litres d'eau, ce qui provoque la précipitation du composite moléculaire de siloxane sous forme de flocons en suspension dans l'eau. Les flocons sont ensuite récupérés par filtration, puis lavés soigneusement à l'eau courante pour enlever tout reste de solvant, puis à l'acétone pour enlever les restes d'eau de lavage.

Les flocons sont ensuite séchés dans un four à air, puis dans un four à vide à une température d'environ 70°C pendant deux jours, puis à une température d'environ 150°C pendant deux jours et finalement à une température de 313°C pendant deux jours.

A la suite de ce chauffage, l'acide polyamique est converti en polyamide-imide avec élimination d'eau. Des films d'épaisseur variant entre 0,1 et 1 mm ont obtenus en procédant au moulage par compression des flocons à une température de 329°C. Le matériau obtenu est isotropique. Ce matériau a été dénommé ST-8515

## EXEMPLE 2

Un composite moléculaire de siloxane a été préparé selon le protocole décrit à l'exemple 1 à partir de 30 g de PAI dissous dans 300 ml de solvant et de 70 g de PSI dissous dans 700 ml de solvant. Le matériau obtenu est isotropique. Ce matériau a été dénommé ST-7030.

**EXEMPLE 3**

Un composite moléculaire de siloxane a été préparé selon le protocole décrit dans l'exemple 1 à partir de 50 g de PAI dissous dans 500 ml de diméthylacétamide et 50 g de PSI dissous dans 500 ml de diméthylacétamide. Ce matériau a été dénommé ST 5050.

**EXEMPLE 4**

Un composite moléculaire de siloxane a été préparé selon le protocole décrit dans l'exemple 1 à partir de 70 g de PAI dissous dans 700 ml de diméthylacétamide et 30 g de PSI dissous dans 300 ml de diméthylacétamide. Ce matériau a été dénommé ST 3070.

**EXEMPLE 5**

Un composite moléculaire de siloxane a été préparé selon le protocole décrit dans l'exemple 1 à partir de 85 g de PAI dissous dans 850 ml de diméthylacétamide et 10 g de PSI dissous dans 150 ml de diméthylacétamide. Ce matériau a été dénommé ST 1585.

**EXEMPLE 6**

- ESSAIS EN LABORATOIRE :

Les tests de dégazage ont été effectués conformément au protocole décrit dans la Norme ESA-PSS-01-702.

Les résultats de ces tests sont montrés dans le Tableau I ci-dessous.

TABLEAU I

| MATERIAU | PTM[a] (%) | PMR[b] (%) | MVC[c] (%) |
|----------|-----------|-----------|-----------|
| ST-8515  | 0,30      | 0,08      | 0,01      |
| ST-7030  | 0,66      | 0,08      | 0,01      |
| a : Perte totale de masse | | | |
| b : Perte de masse récupérable | | | |
| c : Matière volatile condensable collectée | | | |

Les températures de transition vitreuse et les propriétés mécaniques ont également été déterminées et les résultats sont regroupés dans le Tableau II ci-dessous.

## TABLEAU II

| MATERIAU | TTV [a] (°C) | FORCE (MPa) | MODULE (MPa) | ELONGATION (%) |
|----------|---------|-------------|--------------|----------------|
| PSI | 172 | 18,90 | 23,89 | 40 |
| ST-8515 | 187 | 21,25 | 98,96 | 38 |
| ST-7030 | 199 | – | – | – |
| ST-5050 | 222 | – | – | – |
| ST-3070 | 279 | 31,56 | 374,6 | 13 |
| ST-1585 | 283 | – | – | – |

a : Température de transition vitreuse

- ESSAIS EN ENVIRONNEMENT SPATIAL REEL :

Les composites moléculaires de siloxane obtenus aux exemples 1 et 2 ont été exposés à l'environnement de l'orbite terrestre basse au cours de la mission BIOPAN de l'ESA pendant une période de 2 semaines. L'échantillon a été exposé pendant deux semaines à un bombardement d'oxygène atomique de $8,66 \times 10^{20}$ atomes/$cm^2$, à une irradiation ultraviolette équivalente à 12 heures 30 d'irradiation solaire, et également à des variations thermiques cycliques, ainsi qu'à l'action des débris spatiaux et du vide spatial.

Le Tableau III indique les résultats de mesures effectuées par spectroscopie aux photons X sur les composites ST-8515 et ST-7030 avant et après exposition à l'environnement de l'orbite terrestre basse, au cours de la mission BIOPAN.

## TABLEAU III

| MATERIAU | PIC | POURCENTAGE ATOMIQUE | EL [a] | FWHM [b] |
|---|---|---|---|---|
| ST-8515 non-exposé | C 1s | 60,0 | 287,0 | 2,34 |
| | O 1s | 23,0 | 534 | 2,38 |
| | Si 2p | 17,0 | 104,5 | 1,97 |
| ST-8515 exposé | C 1s | 42,8 | 289,0 | 2,25 |
| | O 1s | 33,6 | 536,6 | 2,65 |
| | Si 2p | 23,6 | 107,5 | 2,67 |
| ST-7030 non-exposé | C 1s | 69,1 | 287,0 | 2,62 |
| | O 1s | 16,9 | 534,8 | 2,10 |
| | Si 2p | 14,0 | 104,1 | 2,45 |
| ST-7030 exposé | C 1s | 26,7 | 288,4 | 2,69 |
| | O 1s | 40,9 | 536,8 | 2,48 |
| | Si 2p | 32,4 | 107,5 | 2,79 |
| a : énergie de liaison b : largeur à mi-pic | | | | |

Les photons X sont émis par une source MgK, à incidence normale par rapport à l'échantillon à tester. La mesure est effectuée sur une profondeur de 50Å. On constate que dans chacun des échantillons le pourcentage atomique de carbone a diminué après exposition, alors que ceux de silicium et d'oxygène ont augmenté. D'autre part, la largeur à mi-pic (FWHM) augmente pour le pic 2p du silicium et pour le pic 1s de l'oxygène, alors que celle du pic 1s du carbone demeure pratiquement inchangée. Ceci indique une augmentation du nombre de liaisons siliciumoxygène, qui résulte de la conversion du siloxane en une couche protectrice de silicone.

L'augmentation du contenu en oxygène de l'échantillon reflète la conversion du siloxane en silice, et confirme la stabilité du matériau dans les conditions environnementales de l'orbite terrestre basse. Ces résultats confirment également que le matériau ne subit aucune dégradation due aux U.V., aux débris spatiaux, ou aux variations thermiques cycliques.

## Revendications

**1)** Composite moléculaire dénommé composite moléculaire de siloxane, caractérisé en ce qu'il comprend un polymère thermoplastique rigide de renforcement, dispersé au niveau moléculaire dans un copolymère flexible organosiloxane/polymère thermoplastique.

**2)** Composite moléculaire de siloxane selon la revendication 1, caractérisé en ce que la surface dudit composite moléculaire de siloxane est enrichie en siloxane.

**3)** Composite moléculaire de siloxane selon l'une quelconque des revendications 1 ou 2, caractérisé en ce que le copolymère flexible organosiloxane/polymère thermoplastique est choisi dans le groupe comprenant :
- le polydiméthylsiloxane/polyétherimide,
- le polydiméthylsiloxane/polycarbonate,

- le polydiméthylsiloxane/polysulfone,
- le polydiméthylsiloxane/polyamide-imide,
- le polydiméthylsiloxane/polyester,
- le polydi-méthylsiloxane/polyestéramide,
- le polydiméthylsiloxane/-polyaryléther,
- le polydiméthylsiloxane/polystyrène,
- le polydiméthylsiloxane/polyméthylméthacrylate.

**4)** Composite moléculaire de siloxane selon l'une quelconque des revendications 1 à 3, caractérisé en ce que le polymère thermoplastique rigide est choisi dans le groupe comprenant :

- le poly-p-phénylène téréphtalamide,
- le polyamide-imide, le poly-p-benzamide,
- le poly-p-phénylène oxydiphénylène téréphtalamide,
- le poly-p-phénylène benzobisthiazole,
- le poly-p-phénylène benzobisoxazole,
- les poly-p-phénylènes à chaîne linéaire.

**5)** Composite moléculaire de siloxane selon l'une quelconque des revendications 1 à 4, caractérisé en ce que le copolymère flexible organosiloxane/polymère thermoplastique est un copolymère bloc polydiméthylsiloxane/polyétherimide.

**6)** Composite moléculaire de siloxane selon l'une quelconque des revendications 1 à 5, caractérisé en ce que le polymère thermoplastique rigide est un polyamide imide

**7)** Composite moléculaire de siloxane selon l'une quelconque des revendications 1 à 6, caractérisé en ce qu'ils comprend entre 1 et 98 % en poids du copolymère flexible organosiloxane/polymère thermoplastique.

**8)** Procédé de préparation d'un composite moléculaire de siloxane selon l'une quelconque des revendications 1 à 7, caractérisé en ce qu'il comprend les étapes suivantes :

a) une étape au cours de laquelle l'on procède séparément, jusqu'à dissolution totale, à la dissolution d'une quantité appropriée du polymère thermoplastique rigide dans un solvant convenable, et à la dissolution d'une quantité appropriée du copolymère flexible organosiloxane/polymère thermoplastique dans le même solvant ;

b) une étape au cours de laquelle on mélange de manière homogène les solutions obtenues à l'étape a);

c) une étape au cours de laquelle on ajoute la solution obtenue à l'issue de l'étape b) à un grand volume d'eau, ce qui provoque la formation de flocons de composite moléculaire de siloxane en suspension dans l'eau ;

d) des étapes de récupération, de lavage et de séchage desdits flocons de composite moléculaire de siloxane.

**9)** Procédé selon la revendication 8, caractérisé en que le séchage desdits flocons comprend une étape de séchage dans un four à vide à une température d'environ 70°C pendant 12 à 48 heures, puis à une température d'environ 150°C pendant pendant 12 à 48 heures, et finalement à une température supérieure d'environ 20°C à la température de transition vitreuse du polymère thermoplastique rigide pendant pendant 12 à 48 heures.

**10)** Matériau dont la surface est enrichie en siloxane, caractérisé en ce qu'il est susceptible d'être obtenu par moulage d'un composite moléculaire de siloxane selon l'une quelconque des revendications 1 à 7.

**11)** Matériau selon la revendication 10, caractérisé en ce que le moulage du composite moléculaire de siloxane est effectué sous pression, à une température supérieure de 30°C à la température de transition vitreuse du polymère thermoplastique rigide.

**12)** Matériau à base de composite moléculaire de siloxane selon la revendication 10, caractérisé en ce qu'il s'agit d'un matériau isotropique.

**13)** Matériau à base de composite moléculaire de siloxane selon la revendication 10, caractérisé en ce qu'il s'agit d'un matériau anisotropique.

**14)** Procédé de préparation d'un composite moléculaire de siloxane selon l'une quelconque des revendications 1 à 7, caractérisé en ce qu'il est obtenu par mélange par fusion.

**15)** Utilisation d'un composite moléculaire de siloxane selon l'une quelconque des revendications 1 à 7, pour la construction aérospatiale.

**16)** Utilisation d'un matériau selon l'une quelconque des revendications 10 à 13, pour la construction aérospatiale.

**Office européen des brevets**

## RAPPORT DE RECHERCHE EUROPEENNE

Numero de la demande

EP 94 40 1457

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 329 956 (GENERAL ELECTRIC COMPANY)<br>* revendications 1-10 *<br>* page 1, ligne 11 - ligne 20 *<br>* page 5, ligne 9 - ligne 21 *<br>--- | 1,3 | C08L83/10<br>C08L79/08<br>C08L79/04<br>C08L77/10 |
| D,A | US-A-4 387 193 (HAROLD F. GILES)<br>* revendications 1-8 *<br>* colonne 1, ligne 6 - ligne 13 *<br>* colonne 6, ligne 53 - colonne 7, ligne 3 *<br>--- | 1,3 | |
| D,A | US-A-4 631 318 (WEN-FANG HWANG)<br>* revendications 1,8 *<br>--- | 1 | |
| A | EP-A-0 417 778 (DU PONT DE NEMOURS AND COMPANY)<br>* revendication 1 *<br>* page 5, ligne 31 - ligne 56 *<br>--- | 1 | |
| A | US-A-4 977 223 (FRED E. ARNOLD)<br>* revendication 1 *<br>----- | 1 | **DOMAINES TECHNIQUES RECHERCHES (Int.Cl.6)**<br>C08L<br>C08G |

Le présent rapport a été établi pour toutes les revendications

| Lieu de la recherche | Date d'achèvement de la recherche | Examinateur |
|---|---|---|
| LA HAYE | 14 Septembre 1994 | Depijper, R |